# EUROPEAN PATENT SPECIFICATION

(11) **EP 0 999 026 B1**
(45) Date of publication and mention of the grant of the patent: **20.08.2003**
(21) Application number: 98120676.6
(22) Date of filing: 05.11.1998
(51) Int. Cl.: B29C 44/16

(54) **Method for manufacturing shaped articles by moulding and shaped articles as obtained by this method**
Verfahren zur Herstellung von geformten Artikeln durch Formgebung und durch dieses Verfahren herstellbare geformte Artikel
Méthode de fabrication d'articles formés par moulage et articles formés tels qu'obtenus par cette méthode

(43) Date of publication of application: 10.05.2000
(73) Proprietor: MILLIKEN EUROPE N.V., B-9000 Gent (BE)
(72) Inventor: De Meyer, Willy, 9031 Drongen (BE); Lahaye, Rene L.J., 4105 HA Culemborg (NL)
(74) Representative: HOFFMANN - EITLE

(56) References cited:
- EP-A- 0 304 301
- DE-A- 3 842 846
- US-A- 3 389 195
- DATABASE WPI Section Ch, Week 9303 Derwent Publications Ltd., London, GB; Class A13, AN 93-020808 XP002098121 & JP 04 345638 A (TORAY IND INC) , 1 December 1992
- DATABASE WPI Section Ch, Week 9328 Derwent Publications Ltd., London, GB; Class A32, AN 93-223892 XP002098122 & JP 05 147121 A (HAYASHI GIJUTSU KENKYUSHO KK), 15 June 1993

## Description

The present invention relates to a method for manufacturing shaped articles by moulding and to shaped articles as obtained by using said method.

Shaped articles consisting of a moulded foam structure are well known in the art. Moulded foam structures are e.g. used in many applications where impact protection is desired, for example as inner liners of bicycle helmets and motorcycle helmets, in automotive trim pieces such as dashboards, door panels and headliners etc. Moulded foam structures are, however, not strong enough in itself for many applications and thus frequently need to be reinforced by other materials. In many fields of use, especially in the automotive industry, moulded foam parts do not have a surface which is suitable as a visible exterior surface for reasons of both wear and appearance. It is therefore common to apply a textile or other decorative layer to the foamed part after the foaming/moulding process has been completed. In order that such a textile or other layer is bonded to the foamed structure adhesives are used for fastening the layer to the foamed part.

The closest prior art document JP-A-05 147 121 discloses a method for manufacturing shaped articles by stretching a fabric containing polyolefine between male and female mould parts, closing the mould, introducing thermoplastic beads into the mould cavity, and heating the mould for integrating the fabric with the form.

The object of the present invention is to provide a new way of manufacturing shaped articles by moulding for obtaining moulded foam structures having superior mechanical properties, i.e. better strength and stability than conventional products of this kind, as well as - optionally - an exterior surface which has low wear and a desired appearance. The new method for manufacturing shaped articles by moulding shall also be able to comply with environmental aspects as e.g. reduced use of chemicals and good recyclability. The present invention also aims at providing shaped articles of various nature that can be manufactured by the afore-mentioned new method.

The above objects are met according to the present invention by a method for manufacturing shaped articles by moulding, which method comprises the steps of providing a mould conforming to a desired shape, introducing into the mould a fabric, which is dimensionally stable under first temperature conditions but is able to yield under second temperature conditions, said fabric comprising polyethylene and/or polypropylene and/or polystyrene, and expandable polyethylene and/or polypropylene and/or polystyrene, which will expand under said second temperature conditions, and heating the mould containing said fabric and said expandable polyethylene and/or polypropylene and/or polystyrene to said second temperature conditions.

The invention further provides shaped articles as defined in the independent claim 19.

The fabric, if desired, reinforces the foamed core and may also provide a desired decorative appearance at its visible outer surface. The fabric may also act as a function layer, e.g. as an EMR-shielding fabric. No adhesives are necessary to fasten the fabric to the foam core, bonding is instead achieved during the foaming process in which both the expandable polyethylene and/or polypropylene and/or polystyrene as well as the polyethylene and/or polypropylene and/or polystyrene portion of the fabric assume an at least partly molten state resulting in an integral connection between the fabric and the foamed core after the shaped article thus produced has been cooled.

In addition, the proposed method provides the opportunity to manufacture shaped articles consisting of just one material, e.g. polyethylene or polypropylene or polystyrene, thus facilitating future dismantling and recycling.

Basically, any kind of fabric as defined in claim 1 may be used in the method according to the present invention. The fabric used must be dimensionally stable under said first temperature conditions in order to avoid distortion of the fabric upon insertion into the mould. During the moulding or shaping process, however, the fabric used shall be able to easily assume the desired shape which is why it must yield under said second temperature conditions. The fabric used thus has to have the ability to change its mechanical properties in situ, i.e. in the mould under said second temperature conditions, to allow easy shaping. This may e.g be achieved by using a fabric which comprises yarns that are not fully drawn or heat set. The fabric may be of the woven, knitted, laid, tufted, flocked, non-woven or any other known type of fabric or may also be a combination of such types of fabric. The fabric may also be a woven construction consisting of single or multiple layers (two-dimensional fabric or three-dimensional fabric).

According to the present invention the expandable polyethylene and/or polypropylene and/or polystyrene which is introduced into the mould preferably is in the form of beads. Such beads can easily be introduced into the mould by blowing. Heating the mould containing said fabric and said expandable polyethylene and/or polypropylene and/or polystyrene to said second temperature conditions is preferably performed by steam heating as it is commonly applied in the art of manufacturing of foamed products. Heating may, however, be achieved using any known method. For example, heating may be achieved by using waves for which the polyethylene and/or polypropylene and/or polystyrene portion of the fabric as well as the expandable polyethylene and/or polypropylene and/or polystyrene is sensitive. Various methods of heating may also be combined.

An important aspect of the present invention is that both the foamed structure and the fabric contain at least one of the materials polyethylene, polypropylene or polystyrene because it is these materials which provide for the integral connection between the fabric and the foamed core of the shaped article. There are, however, various ways to ensure that polyethylene and/or polypropylene and/or polystyrene is present on or in the fabric used.

In a preferred embodiment of the method according to the present invention a bonded fabric is used, which bonded fabric comprises a mesh of filaments of the core-sheath type and whose bonding is capable of yielding under said second temperature conditions. Such a bonded fabric is explained in more detail in applicant's international patent application PCT/EP94/01546 Such a fabric has substantially no elasticity in the longitudinal direction under first conditions but yields under second conditions without affecting the relatively strong filament cores. The sheath material, which has a lower melting point than the core and provides for the bonding, may be a yarn or foil which is spun, core-textured, enveloped or twisted around a core yarn such as glass, aramid or carbon. The core yarn may be a composite itself. If a bonded fabric comprising a mesh of filaments of the core-sheath type is used in the method according to the present invention it is preferred that the sheath comprises polyethylene and/or polypropylene and/or polystyrene. Preferably the mesh is bonded together at the crossing points of the filaments.

Another way of achieving a fabric that is dimensionally stable under first temperature conditions and yields under second temperature conditions is to provide longitudinally extending filaments consisting of polyethylene and/or polypropylene and/or polystyrene, which filaments thus act as carriers only under said first temperature conditions as they yield under said second temperature conditons.

A still further way to provide for polyethylene and/or polypropylene and/or polystyrene on or in the fabric is to apply, at least to the side of said fabric facing the expandable polyethylene and/or polypropylene and/or polystyrene in the mould, a solution or emulsion containing polyethylene and/or polypropylene and/or polystyrene before heating the fabric and expandable polyethylene and/or polypropylene and/or polystyrene to said second temperature conditions. A solution or emulsion containing polyethylene and/or polypropylene and/or polystyrene may be applied to the fabric by e.g. spraying or by dipping the fabric into said solution or emulsion.

In addition to the reinforcing effect which the fabric may provide for the foamed core of a shaped article obtained with the method according to the present invention it is also possible to employ a fabric having a top side which provides for a desired appearance and a bottom side which faces the expandable polyethylene and/or polypropylene and/or polystyrene in the mould and which is adapted to at least partly melt under said second temperature conditions. By adapting the side of the fabric facing the foam core such that this side at least partly melts under said second temperature conditions an integral connection between the fabric and the foam core will be obtained without adversely affecting the top side, e.g. the decorative surface of the fabric. Automotive seat cushions or interior door panels may thus be produced in a one-step process. Such a fabric could e.g. have a satin weaving top side providing for a durable and pleasantly looking and feeling outer surface. The advantage of a satin weave with respect to the present invention is that most of the polyolefine type of yarn may be at one side of the fabric thus facilitating and enhancing bonding with the foam and providing, if desired, for a nice colour effect.

It is worth noting that the fabric employed in the method according to the present invention need not appear textile-like but may also have an e.g. leather-like appearance and may also be a metal fibre type of fabric.

It is apparent from the foregoing that the method according to the present invention provides a very favourable way of producing shaped articles by moulding. A promising field of application is the automotive industry where the method according to the present invention can be used to produce a variety of trim pieces such as interior door panels, headliners, seat cushions ready with upholstery, dashboards or portions thereof, sun visors, consoles and so on. Even complete convertible tops are envisaged to replace conventional fabric/foam constructions.

Other fields of application are the production of helmets, e.g. sport helmets and motorcycle helmets, body protectors such as knee protectors or leg protectors as e.g. used by football players, baby seats, suitcases and last but not least protective pieces for electronic equipment with or without EMR-shielding capability.

Another interesting field of application is the carpet industry as according to the method of the present invention carpets also may be produced. Such a carpet may e.g. consist of a top layer consisting of dyeable polyethylene and/or polypropylene having a backing layer of e.g. PE or PP or a mix thereof followed by a foam layer which has been bonded to the backing layer using the method according to the present invention.

## Claims

1. A method for manufacturing shaped articles by moulding, said method comprising the steps of:
- providing a mould conforming to a desired shape,
- introducing into the mould
-- a fabric, which is dimensionally stable under first temperature conditions but is able to yield under second temperature conditions, said fabric comprising polyethylene and/or polypropylene and/or polystyrene, and
-- expandable polyethylene and/or polypropylene and/or polystyrene, which will expand under said second temperature conditions, and
- heating the mould containing said fabric and said expandable polyethylene and/or polypropylene and/or polystyrene to said second temperature conditions.

2. A method according to claim 1, wherein the expandable polyethylene and/or polypropylene and/or polystyrene is in the form of beads.

3. A method according to claim 1 or 2, wherein heating the mould containing said fabric and said expandable polyethylene and/or polypropylene and/or polystyrene to said second temperature conditions is achieved by steam heating.

4. A method according to claim 1, wherein said fabric is of the woven, knitted, laid, tufted, flocked, non-woven or any other known type of fabric or a combination thereof.

5. A method according to claim 4, wherein said fabric comprises yarns that are not fully drawn or heat set.

6. A method according to claim 1, wherein said fabric comprises co-spun yarns or core-sheath yarns.

7. A method according to claim 6, wherein said fabric is a bonded fabric comprising a mesh of filaments of the core-sheath type, whose bonding is capable of yielding only under said second temperature conditions.

8. A method according to claim 7, wherein the mesh is bonded together at the crossing points of the filaments.

9. A method according to claim 7 or 8, wherein the sheath comprises polyethylene and/or polypropylene and/or polystyrene.

10. A method according to any of the preceding claims, wherein said fabric comprises longitudinally-extending filaments consisting of polyethylene and/or polypropylene and/or polystyrene and acting as carriers only under said first temperature conditions.

11. A method according to claim 1, wherein a solution or emulsion containing polyethylene and/or polypropylene and/or polystyrene has been applied to the side of said fabric facing the expandable polyethylene and/or polypropylene and/or polystyrene before heating it to said second temperature conditions in the mould.

12. A method according to claim 1, wherein said fabric has a top side providing for a desired appearance and a bottom side, which bottom side faces the expandable polyethylene and/or polypropylene and/or polystyrene in the mould and is adapted to at least partly melt under said second temperature conditions.

13. A method according to claim 1, wherein said fabric is an EMR-shielding fabric.

14. A shaped article comprising a fabric bonded to foamed polyethylene and/or polypropylene and/or polystyrene, as obtained by a method according to any of the preceding claims.

15. A shaped article according to claim 14, wherein said fabric is a reinforcing fabric.

16. A shaped article according to claim 14, wherein said fabric is an EMR-shielding fabric.

17. A shaped article according to claim 14, wherein the shaped article is an automotive trim piece, such as an interior door panel, a console, a headliner, a seat upholstery, a dashboard or portion thereof, a sun visor etc.

18. A shaped article according to claim 14, wherein the shaped article is a cycle helmet.

19. A shaped article according to claim 14, wherein the shaped article is a portion of a suitcase.

20. A shaped article according to claim 14, wherein the shaped article is a baby seat.

21. A shaped article according to claim 14, wherein the shaped article is a body protector, e.g. a knee protector.

22. A shaped article according to claim 14, wherein the shaped article is a protective piece for electronic equipment.

23. A shaped article according to claim 14, wherein the shaped article is a wall or ceiling covering.

24. A shaped article according to claim 14, wherein the shaped article is a carpet.

## Patentansprüche

1. Verfahren zur Herstellung geformter Artikel durch Formgebung, das die folgenden Schritte umfasst:
• Bereitstellen einer Form mit einer gewünschten Formgestaltung,
• Einführen in die Form
•• eines Stoffs, der unter ersten Temperaturbedingungen dimensionsstabil ist, unter zweiten Temperaturbedingungen jedoch in der Lage ist, nachzugeben, der Stoff umfasst Polyethylen und/oder Polypropylen und/oder Polystyrol, und
•• eines expandierbaren Polyethylens und/oder Polypropylens und/oder Polystyrols, das unter den zweiten Temperaturbedingungen expandiert, und
• Erwärmen der Form, die den Stoff und das expandierbare Polyethylen und/oder Polypropylen und/oder Polystyrol enthält, auf die zweiten Temperaturbedingungen.

2. Verfahren gemäss Anspruch 1, worin das expandierbare Polyethylen und/oder Polypropylen und/oder Polystyrol in Form von Kügelchen vorliegt.

3. Verfahren gemäss Anspruch 1 oder 2, worin die Erwärmung der Form, die den Stoff und das expandierbare Polyethylen und/oder Polypropylen und/oder Polystyrol enthält, auf die zweiten Temperaturbedingungen durch Erwärmen mit Dampf erzielt wird.

4. Verfahren gemäss Anspruch 1, worin der Stoff ein gewebter, gestrickter, gelegter, getufteter, geflockter oder ein Non-woven-Stoff oder ein beliebiger anderer bekannter Stofftyp oder eine Kombination daraus ist.

5. Verfahren gemäss Anspruch 4, worin der Stoff Garne umfasst, die nicht vollständig gezogen oder warmgehärtet sind.

6. Verfahren gemäss Anspruch 1, worin der Stoff coversponnene Garne oder Kern/Hüllen-Garne umfasst.

7. Verfahren gemäss Anspruch 6, worin der Stoff ein gebondeter Stoff ist, der ein Gitter aus Filamenten vom Kern/Hüllen-Typ umfasst, dessen Verbund nur unter den zweiten Temperaturbedingungen zum Nachgeben in der Lage ist.

8. Verfahren gemäss Anspruch 7, worin das Gitter an den Kreuzungspunkten der Filamente gebondet ist.

9. Verfahren gemäss Anspruch 7 oder 8, worin die Hülle Polyethylen und/oder Polypropylen und/oder Polystyrol umfasst.

10. Verfahren gemäss mindestens einem der vorhergehenden Ansprüche, worin der Stoff sich in Längsrichtung erstreckende Filamente umfasst, die aus Polyethylen und/oder Polypropylen und/oder Polystyrol bestehen und nur unter den ersten Temperaturbedingungen als Träger wirken.

11. Verfahren gemäss Anspruch 1, worin eine Lösung oder Emulsion, die Polyethylen und/oder Polypropylen und/oder Polystyrol enthält, auf die Seite des Stoffs aufgebracht wurde, die dem expandierbaren Polyethylen und/oder Polypropylen und/oder Polystyrol zugewandt ist, bevor die Erwärmung auf die zweiten Temperaturbedingungen in der Form stattfindet.

12. Verfahren gemäss Anspruch 1, worin der Stoff eine Oberseite aufweist, die ein gewünschtes äusseres Erscheinungsbild liefert, und eine Unterseite, die dem expandierbaren Polyethylen und/oder Polypropylen und/oder Polystyrol in der Form zugewandt ist und so angepasst ist, dass sie unter den zweiten Temperaturbedingungen zumindest teilweise schmilzt.

13. Verfahren gemäss Anspruch 1, worin der Stoff ein elektromagnetische Strahlung (EMR) -abschirmender Stoff ist.

14. Geformter Artikel, der einen Stoff umfasst, der an aufgeschäumtes Polyethylen und/oder Polypropylen und/oder Polystyrol gebunden ist und der erhältlich ist nach einem Verfahren gemäss mindestens einem der vorhergehenden Ansprüche.

15. Geformter Artikel gemäss Anspruch 14, worin der Stoff ein Verstärkungsstoff ist.

16. Geformter Artikel gemäss Anspruch 14, worin der Stoff ein elektromagnetische Strahlung (EMR) -abschirmender Stoff ist.

17. Geformter Artikel gemäss Anspruch 14, worin der geformte Artikel ein Automobilinneneinrichtungsteil ist, wie beispielsweise eine Türinnenverkleidung, eine Konsole, eine Kopfleiste, eine Sitzpolsterung, ein Armaturenbrett oder ein Teil davon, eine Sonnenabschirmung, etc.

18. Geformter Artikel gemäss Anspruch 14, worin der geformte Artikel ein Zweiradhelm ist.

19. Geformter Artikel gemäss Anspruch 14, worin der geformte Artikel ein Teil eines Koffers ist.

20. Geformter Artikel gemäss Anspruch 14, worin der geformte Artikel ein Babysitz ist.

21. Geformter Artikel gemäss Anspruch 14, worin der geformte Artikel ein Körperschutz, z.B. ein Knieschutz, ist.

22. Geformter Artikel gemäss Anspruch 14, worin der geformte Artikel ein schützendes Bauteil für elektronische Ausrüstung ist.

23. Geformter Artikel gemäss Anspruch 14, worin der geformte Artikel eine Wand- oder Deckenabdeckung ist.

24. Geformter Artikel gemäss Anspruch 14, worin der geformte Artikel ein Teppich ist.

## Revendications

1. Procédé de fabrication d'articles formés par moulage, ledit procédé comprenant les étapes consistant à :
- fournir un moule présentant une forme souhaitée,
- introduire dans le moule
-- un tissu qui a des dimensions stables sous de premières conditions de température, mais peut avoir un rendement sous des deuxièmes conditions de température, ledit tissu comprenant du polyéthylène et/ou du polypropylène et/ou du polystyrène, et
-- du polyéthylène expansible et/ou du polypropylène et/ou du polystyrène qui gonflera sous lesdites deuxièmes conditions de température et
- chauffer le moule contenant ledit tissu et ledit polyéthylène et/ou polypropylène et/ou polystyrène expansé auxdites deuxièmes conditions de température.

2. Procédé selon la revendication 1, dans lequel le polyéthylène et/ou polypropylène et/ou polystyrène expansé se présente sous forme de billes.

3. Procédé selon la revendication 1 ou 2, dans lequel le chauffage du moule contenant ledit tissu et ledit polyéthylène et/ou polypropylène et/ou polystyrène expansé auxdites deuxièmes conditions de température est obtenu au moyen d'un chauffage à la vapeur.

4. Procédé selon la revendication 1, dans lequel ledit tissu est du type tissé, tricoté, tramé, touffeté, floqué, non tissé ou tout autre type de tissu ou une combinaison de ceux-ci.

5. Procédé selon la revendication 4, dans lequel ledit tissu comprend des fils qui ne sont pas entièrement étirés ou thermofixés.

6. Procédé selon la revendication 1, dans lequel ledit tissu comprend des fils filés ou des fils à gaine.

7. Procédé selon la revendication 6, dans lequel ledit tissu est un tissu collé comprenant une maille de filaments de type à gaine dont le liage peut avoir un rendement uniquement sous lesdites deuxièmes conditions de température.

8. Procédé selon la revendication 7, dans lequel la maille est collée aux points de croisure des filaments.

9. Procédé selon la revendication 7 ou 8, dans lequel la gaine comprend du polyéthylène et/ou du polypropylène et/ou du polystyrène.

10. Procédé selon l'une quelconque des revendications précédentes, dans lequel ledit tissu comprend des filaments s'étirant de manière longitudinale constitués de polyéthylène et/ou de polypropylène et/ou de polystyrène et agissant comme des véhiculeurs uniquement sous lesdites premières conditions de température.

11. Procédé selon la revendication 1, dans lequel une solution ou une émulsion contenant le polyéthylène et/ou polypropylène et/ou polystyrène expansé a été appliquée sur le côté dudit tissu faisant face au polyéthylène et/ou polypropylène et/ou polystyrène expansé avant de le chauffer auxdites deuxièmes conditions de température dans le moule.

12. Procédé selon la revendication 1, dans lequel ledit tissu présente une face supérieure offrant un aspect souhaité et une face inférieure, laquelle face inférieure fait face au polyéthylène et/ou polypropylène et/ou polystyrène expansé dans le moule et est adapté de manière à fondre au moins partiellement sous lesdites deuxièmes conditions de température.

13. Procédé selon la revendication 1, dans lequel ledit tissue est un tissu de protection contre les rayonnements électromagnétiques.

14. Article formé comprenant un tissu collé à du polyéthylène et/ou du polypropylène et/ou du polystyrène expansé, tel qu'obtenu par un procédé selon l'une quelconque des revendications précédentes.

15. Article formé selon la revendication 14, dans lequel ledit tissu est un tissu renforcé.

16. Article formé selon la revendication 14, dans lequel ledit tissu est un tissu de protection contre les rayonnements électromagnétiques.

17. Article formé selon la revendication 14, dans lequel l'article formé est une pièce de garniture automobile, telle qu'un panneau de porte intérieur, une console, une garniture de toit, un garnissage de siège, un tableau de bord ou une portion de celle-ci, un pare-soleil, etc.

18. Article formé selon la revendication 14, dans lequel l'article formé est un casque de vélo.

19. Article formé selon la revendication 14, dans lequel l'article formé est une partie d'une valise.

20. Article formé selon la revendication 14, dans lequel l'article formé est un siège de bébé.

21. Article formé selon la revendication 14, dans lequel l'article formé est une protection corporelle, par exemple une genouillère.

22. Article formé selon la revendication 14, dans lequel l'article formé est une pièce de protection de matériel électronique.

23. Article formé selon la revendication 14, dans lequel l'article formé est un revêtement de mur ou de plafond.

24. Article formé selon la revendication 14, dans lequel l'article formé est un tapis.
